# FASCICULE DE BREVET EUROPEEN

(11) **EP 2 862 154 B1**
(45) Date de publication et mention de la délivrance du brevet: **18.11.2020**
(21) Numéro de dépôt: 13730030.7
(22) Date de dépôt: 03.06.2013
(51) Int. Cl.: G06K 9/00, G06K 9/32, G08G 1/017, G08G 1/01, G08G 1/052

(54) **REGROUPEMENT DE DONNEES ATTACHEES A DES IMAGES**
GRUPPIERUNG VON AN BILDERN ANGEHÄNGTEN DATEN
GROUPING OF DATA ATTACHED TO IMAGES

(30) Priorité: 18.06.2012 FR 1255696
(43) Date de publication de la demande: 22.04.2015
(73) Titulaire: Idemia Identity & Security France, 92400 Courbevoie (FR)
(72) Inventeur: ROUH, Alain, 92130 Issy Les Moulineaux (FR); BEAUDET, Jean, 92130 Issy Les Moulineaux (FR); ROSTAING, Laurent, 92130 Issy Les Moulineaux (FR)
(74) Mandataire: Plasseraud IP
(86) Numéro de dépôt international: PCT/FR2013/051256
(87) Numéro de publication internationale: WO 2013/190202

(56) Documents cités:
- EP-A1- 1 276 086
- EP-A1- 1 870 868
- WO-A1-2006/111715
- WO-A1-2011/041903
- US-A- 5 948 038
- US-A1- 2009 207 046
- SUMAN DEB ET AL: "Face Recognition System in Cell Phones Based on Text Message Service", LECTURE NOTES OF THE INSTITUTE FOR COMPUTER SCIENCES, SOCIAL INFORMATICS AND TELECOMMUNICATIONS ENGINEERING; SECOND INTERNATIONAL CONFERENCE, CCSIT 2012, SPRINGER, DE; BANGALORE, INDIA , vol. 86 1 janvier 2012 (2012-01-01), pages 134-141, XP008160353, ISSN: 1867-8211, DOI: 10.1007/978-3-642-27317-9_14 ISBN: 978-3-642-17758-3 Extrait de l'Internet: URL:http://rd.springer.com/chapter/10.1007 %2F978-3-642-27317-9_14

## Description

La présente invention concerne un procédé et un système de regroupement de données attachées à des images, qui sont adaptés pour regrouper entre elles des données correspondant à une même cible qui est saisie dans plusieurs images, parmi d'autres images de cibles.

Dans la présente demande de brevet, on désigne par cible tout objet ou individu qui est saisi dans l'une au moins des images en vue d'en rechercher la présence dans plusieurs images.

De nombreuses applications nécessitent de comparer des images pour regrouper des données qui concernent une même cible, avec un taux d'erreur qui soit très faible quant à l'attribution de plusieurs images à la même cible commune, quelque soit cette cible parmi une population qui peut atteindre plusieurs milliers, ou millions de cibles différentes.

Une telle application est la poursuite de véhicules à l'intérieur d'une portion de réseau routier, par exemple pour déterminer une taxe de circulation à appliquer à chaque véhicule en fonction de son trajet. Pour cela, des dispositifs de saisie d'images peuvent être installés à chaque point d'entrée et de sortie de la portion de réseau routier, et éventuellement aussi en des points intermédiaires, afin de photographier les véhicules qui passent par ces points. Il est alors nécessaire de regrouper toutes les images saisies qui concernent un même véhicule, pour déterminer son trajet dans la portion de réseau routier et le prix de circulation correspondant.

Une autre application est la détermination de la vitesse moyenne d'un véhicule sur un tronçon de route. Pour cela, deux dispositifs séparés de saisie d'images sont disposés en des points de passage distants le long de la route, afin de saisir en image chaque véhicule lorsqu'il franchit ces points de passage. Il est alors nécessaire de regrouper les heures de saisie de deux images qui sont saisies chacune par l'un des dispositifs pour un même véhicule, pour déterminer sa vitesse moyenne entre les deux points de passage en divisant la distance entre ces deux points par la durée du trajet.

Une première méthode pour ces applications consiste à transmettre les images qui sont saisies en des lieux différents à une unité commune de traitement d'image. Cette unité réalise les opérations nécessaires pour regrouper entre elles les images qui concernent un même véhicule. Mais une telle méthode nécessite de transmettre des quantités considérables de données d'images, notamment pour que l'unité de traitement d'image dispose des images avec une résolution qui soit suffisamment élevée pour obtenir un taux d'erreur minimal dans l'attribution de plusieurs images, deux ou plus selon l'application, à un même véhicule.

Pour pallier cette difficulté, une autre méthode consiste à traiter et analyser les images localement au niveau de chaque dispositif de saisie d'image, et à ne transmettre à une unité de comparaison commune qu'un résultat de l'analyse de chaque image. Par exemple, l'analyse des images peut aboutir à la lecture des plaques d'immatriculation des véhicules photographiés, par reconnaissance de caractères alphanumériques, puis les chaînes de caractères qui constituent les numéros d'immatriculation lus sont transmises à l'unité de comparaison. Celle-ci regroupe alors les données qui correspondent à des numéros d'immatriculation lus qui sont identiques. Mais une telle lecture des plaques d'immatriculation dans des images qui sont saisies avec des conditions variables d'éclairement, d'éloignement et/ou d'angle de prise de vue par rapport à l'orientation des plaques d'immatriculation, aboutit à un taux d'erreur qui n'est pas compatible avec les applications visées. Typiquement, en utilisant les logiciels de reconnaissance de caractères qui sont disponibles, les taux d'erreurs de lecture des plaques d'immatriculation sont de quelques pourcents, alors que des valeurs de taux d'erreur qui sont inférieures un dix-millième sont nécessaires.

Pour réduire les taux d'erreurs, le document WO 2008/041210 propose de réaliser une lecture des plaques d'immatriculation des véhicules en distinguant un nombre restreint de caractères alphanumériques, pour éviter de confondre deux caractères dont les apparences sont proches. Mais des résultats de lecture qui sont identiques peuvent alors être obtenus pour des plaques d'immatriculation qui sont différentes.

Le document EP 1 276 086 propose de compléter la lecture automatique de la plaque d'immatriculation d'un véhicule par des caractéristiques supplémentaires du véhicule. Certaines de ces caractéristiques supplémentaires peuvent être lues dans l'image, telles que la taille du véhicule, des couleurs de celui-ci, des contours de marquages ou des inscriptions qui sont visibles sur le véhicule, etc. D'autres caractéristiques acquises différemment peuvent aussi être utilisées, telles que des caractéristiques sonores du véhicule par exemple. Mais l'obtention de telles caractéristiques supplémentaires avec une fiabilité qui soit suffisante est difficile compte tenu de conditions variables de prise de vue ou d'enregistrement sonore.

En outre, lorsque des résultats d'analyse des images saisies sont transmis entre les dispositifs de saisie d'images et l'unité de comparaison, y compris des résultats de lecture de caractères alphanumériques, une éventuelle erreur dans le résultat d'analyse ou de lecture ne peut plus être corrigée au niveau de l'unité de comparaison commune, puisque les images initiales n'ont pas été transmises.

Le document WO 2011/041903 A1 divulgue de traiter des images par analytique vidéo pour reconnaître un événement.

Le document EP 1 870 868 A1 divulgue de comparer des résultats de lecture de plaques d'immatriculation par identification de caractères, qui sont obtenus à partir d'images séparées.

Dans ces conditions, un but de la présente invention consiste à proposer un nouveau procédé pour regrouper des données qui sont attachées à des images d'une même cible, qui ne présente pas les inconvénients des procédés antérieurs.

Plus particulièrement, un premier but de l'invention consiste à regrouper des données relatives à une même cible, avec un taux d'erreur de regroupement qui soit très faible, et notamment plus faible que les taux d'erreurs des procédés à lecture par reconnaissance de caractères.

Un second but de l'invention consiste à proposer un tel procédé qui soit compatible avec un nombre important d'images qui sont saisies par unité de temps, notamment lorsque les cibles à surveiller ou à identifier se succèdent à une cadence rapide ou très rapide.

Un troisième but de l'invention est la possibilité de corriger une erreur dans le résultat du regroupement des données, lorsque ce résultat apparaît faux, par exemple à un opérateur du procédé et/ou en utilisant un algorithme plus précis dans un centre de traitement centralisé.

Enfin, un quatrième but de l'invention est de réduire la complexité et la quantité des traitements numériques d'images et/ou de données qui sont effectués dans des stations de terrain, pour réduire les coûts de ces stations elles-mêmes ainsi que ceux des mises à jour des logiciels qui sont utilisés dans celles-ci.

Pour atteindre ces buts et d'autres, l'invention propose un procédé de regroupement de données attachées à des images, qui comprend les étapes suivantes :
/1/ saisir des images dont chacune est une vue d'une cible qui est pourvue d'une zone d'identification, la zone d'identification contenant des caractères de distinction permettant de distinguer la cible parmi d'autres cibles, et les zones d'identification respectives des cibles ayant des caractéristiques communes ;
/2/ en utilisant les caractéristiques communes des zones d'identification, extraire au moins une portion d'image de chaque image, la portion d'image contenant la zone d'identification et étant plus petite que l'image ;
/3/ transmettre les portions d'images qui ont été extraites à une unité de comparaison d'images ; et
/4/ en utilisant l'unité de comparaison d'images, rechercher une coïncidence d'apparence pour les caractères de distinction entre des portions d'images différentes, et regrouper entre elles des données attachées à celles des images qui ont abouti à un résultat de coïncidence positif.

Ainsi, dans un procédé conforme à l'invention, des portions restreintes des images sont seulement transmises à l'unité de comparaison d'images, si bien que la quantité de données d'images qui sont transmises est limitée. Cette transmission peut être effectuée en comprimant les données d'image des portions d'images, avec ou sans perte d'information. De préférence, les portions d'images peuvent être transmises sans perte d'information, de sorte que l'unité de comparaison d'images dispose de données initiales d'images qui soient les plus fiables et complètes que possible pour les zones d'identification des cibles. En particulier, la résolution et la sensibilité des images telles qu'elles ont été saisies peuvent être conservées pour la transmission des portions d'images à l'unité de comparaison d'images. De cette façon, le taux d'erreurs dans les résultats de regroupement des données peut être réduit. Alternativement, la transmission des portions d'images peut être effectuée avec compression et/ou perte partielle de données d'image, selon le compromis qui est recherché entre le taux d'erreurs qui est accepté et le coût de la bande passante qui est nécessaire pour la transmission.

De plus, l'unité de comparaison d'images regroupe les données qui sont attachées aux images en fonction d'une coïncidence d'apparence, y compris une coïncidence de forme, qui est détectée pour les caractères de distinction des cibles, à l'intérieur des portions d'images transmises. Or les taux d'erreurs des algorithmes qui sont disponibles pour détecter des coïncidences d'apparence sont très inférieurs à ceux des algorithmes de lecture par reconnaissance de caractères. En évitant une étape de lecture par reconnaissance de caractères, le procédé de l'invention aboutit à un taux d'erreur pour le regroupement des données relatives à une cible commune, qui est très faible. Autrement dit, la fréquence moyenne selon laquelle des données sont regroupées alors qu'elles concernent des cibles différentes, ou que des données ne sont pas regroupées alors qu'elles concernent une même cible, est très basse.

La quantité des données d'images qui sont transmises à l'unité de comparaison d'images, et qui sont traitées par celle-ci étant réduite, le procédé de l'invention est compatible avec une cadence qui peut être importante ou très importante pour la saisie des images.

Enfin, puisque l'unité de comparaison d'images reçoit les portions d'images, une erreur qui surviendrait lors du traitement d'une de ces portions d'images peut être corrigée lors d'un traitement supplémentaire effectué de façon centralisée. Un tel traitement de détection et/ou de correction d'erreur peut être effectué automatiquement ou commandé par un opérateur du procédé qui agit au niveau de cette unité.

Les données qui sont attachées à chaque image peuvent être fournies par le dispositif de saisie d'image utilisé pour cette image, ou par un module annexe qui est couplé au dispositif de saisie d'image, ou encore par l'unité de comparaison d'images. Par exemple, ces données peuvent comprendre une heure de saisie de l'image, une indication d'un lieu de la saisie d'image, une indication d'une caractéristique supplémentaire relative à la cible au moment de la saisie d'image, une caractéristique de la cible qui est déterminée à partir de l'image avant l'étape /2/, ou une caractéristique de la cible qui est déterminée à partir de la portion d'image par l'unité de comparaison d'images, ou encore une caractéristique de la cible qui peut être déterminée par un opérateur du procédé, etc.

L'invention est particulièrement avantageuse lorsque l'unité de comparaison d'images est distante du dispositif de saisie d'image, ou d'au moins un des dispositifs de saisie d'images utilisés. Toutefois, l'unité de comparaison d'images peut aussi être située au même endroit que le ou l'un des dispositifs de saisie d'image, voire regroupée avec lui dans une même station de terrain.

Dans des modes de mise en œuvre préférés de l'invention, l'étape /4/ peut comprendre au moins une correction d'imagerie qui est appliquée à au moins une des portions d'images entre lesquelles la coïncidence d'apparence est recherchée pour les caractères de distinction, mais pas à une autre de ces portions d'images avec laquelle la coïncidence d'apparence est recherchée. Cette correction d'imagerie peut être déterminée pour compenser au moins partiellement des variations de conditions de saisie d'image entre les portions d'images, et la coïncidence d'apparence est recherchée en utilisant la portion d'image corrigée et la portion d'image non-corrigée. Une telle correction permet de réduire le taux d'erreur dans le regroupement des données qui concernent des cibles communes. En outre, le maintien d'une portion d'image sans correction permet de supprimer pour celle-ci le risque d'une perte d'information qui serait introduite par la correction. D'une façon encore plus préférée, la correction d'imagerie peut concerner au moins un paramètre d'imagerie, et elle n'est appliquée qu'à l'une des portions d'images. En fonction du paramètre d'imagerie concerné, la correction peut être appliquée à celle des portions d'images qui possède une qualité supérieure ou inférieure par rapport à ce paramètre d'imagerie, parmi les portions d'images entre lesquelles la coïncidence d'apparence est recherchée pour les caractères de distinction. Le paramètre d'imagerie qui est corrigé peut être sélectionné parmi :
- un contraste des caractères de distinction dans la portion d'image ;
- une dimension apparente des caractères de distinction dans la portion d'image ;
- un angle de prise de vue, par rapport à une direction perpendiculaire à la zone d'identification sur la cible ;
- une netteté des caractères de distinction dans la portion d'image ; et
- une combinaison de plusieurs des paramètres d'imagerie précédents.

Lorsque la correction d'imagerie concerne au moins l'un parmi la dimension apparente des caractères de distinction et l'angle de prise de vue, la correction d'imagerie peut comprendre une transformation par homographie qui est appliquée à la portion d'image corrigée. De façon connue, une homographie a la propriété de conserver l'alignement, c'est-à-dire que des points qui sont initialement alignés dans la portion d'image produisent par la transformation homographique des points transformés qui sont aussi alignés les uns par rapport au autres. Une telle transformation par homographie est donc particulièrement adaptée lorsque la zone d'identification de chaque cible est plane ou peut être assimilée à une forme plane. Eventuellement encore, la correction d'imagerie peut comprendre un recalage de l'une des portions d'images par rapport à l'autre, avec une précision du recalage qui peut être plus fine qu'une dimension unitaire de point d'image à au moins un endroit dans la portion d'image à laquelle le recalage est appliqué. Dans le jargon de l'Homme du métier, un tel recalage est désigné par «recalage sub-pixellique».

Eventuellement, l'étape /4/ peut comprendre au moins deux corrections d'imagerie qui sont appliquées chacune à au moins une des portions d'images entre lesquelles la coïncidence d'apparence est recherchée pour les caractères de distinction, mais pas à une autre de ces portions d'images. Chaque correction d'imagerie peut alors concerner un paramètre d'imagerie qui est différent. Dans ce cas, la portion d'image qui est corrigée pour l'un des paramètres d'imagerie peut être différente de celle qui est corrigée pour l'autre paramètre d'imagerie.

Dans certaines applications de l'invention, toutes les images peuvent être saisies à l'étape /1/ en utilisant un unique dispositif de saisie d'image. Alternativement, plusieurs dispositifs de saisie d'images peuvent être utilisés pour d'autres applications. La coïncidence d'apparence pour les caractères de distinction peut alors être recherchée à l'étape /4/ entre des portions d'images qui sont extraites d'images saisies respectivement par des dispositifs différents, parmi les dispositifs utilisés.

Le procédé de l'invention peut être mis en œuvre de façon avantageuse pour de nombreuses applications, parmi lesquelles la caractérisation d'une trajectoire de cible, la détermination des trajets qui sont suivis respectivement par des véhicules dans une portion de réseau routier, la mesure des vitesses moyennes respectives de véhicules sur un tronçon de route, la mesure des vitesses respectives de véhicules, notamment par effet stéréoscopique, le contrôle d'accès, la biométrie, notamment par imagerie d'une portion de surface cutanée, etc.

L'invention propose aussi un système de regroupement de données qui sont attachées à des images, ce système comprenant :
- au moins un dispositif de saisie d'image, qui est adapté pour saisir des images de cibles ;
- au moins un module de traitement d'image, qui est couplé respectivement à chaque dispositif de saisie d'image, et adapté pour extraire de chaque image, au moins une portion d'image plus petite que l'image et contenant une zone d'identification d'une cible contenue dans l'image, à partir de caractéristiques communes aux zones d'identification des cibles ;

- une unité de comparaison d'images ;
- au moins un module de transmission des portions d'images, qui est connecté pour transmettre les portions d'images extraites par le module de traitement d'image à l'unité de comparaison d'images ; et
- au moins un module d'acquisition de données, qui est adapté pour attacher des données à chaque image saisie.

L'unité de comparaison d'images est alors adaptée pour rechercher une coïncidence d'apparence pour des caractères de distinction contenus dans les zones d'identification, entre des portions d'images qui sont différentes, et pour regrouper entre elles les données attachées à celles des images qui ont abouti à un résultat de coïncidence positif.

Un tel système est adapté pour mettre en œuvre un procédé de regroupement de données qui sont attachées à des images, tel que décrit précédemment. Il peut aussi l'être pour mettre en œuvre les modes préférés et avantageux cités, et être compris dans des ensembles applicatifs qui sont dédiés chacun à l'une au moins des applications citées plus haut.

Préférablement, chaque module de transmission des portions d'images peut être adapté pour les transmettre sans perte d'information d'image. Par exemple, la transmission des portions d'images peut être effectuée dans le format de compression JPEG 2000 à profil sans perte.

Préférablement aussi, chaque module de traitement d'image peut être adapté pour extraire chaque portion d'image avec des dimensions pour cette portion d'image qui sont inférieures ou égales à 100 points d'image par 400 points d'image.

D'autres particularités et avantages de la présente invention apparaîtront dans la description ci-après d'exemples de mise en œuvre non limitatifs, en référence aux dessins annexés, dans lesquels :
- la figure 1 est un schéma synoptique d'un système de regroupement de données attachées à des images, qui est conforme à la présente invention ; et
- les figures 2 à 5 illustrent plusieurs applications d'un système conforme à l'invention.

Pour raison de clarté, les dimensions des éléments qui sont représentés dans ces figures ne correspondent ni à des dimensions réelles, ni à des rapports de dimensions réels. En outre, des références identiques qui sont indiquées dans des figures différentes désignent des éléments identiques ou qui ont des fonctions identiques.

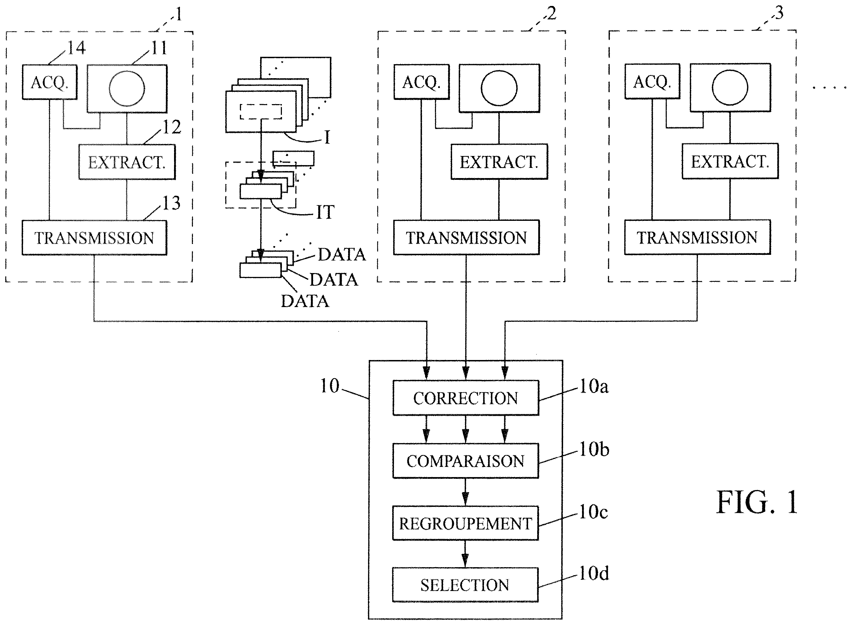

Conformément à la figure 1, une station de terrain («remote station» en anglais) référencée 1 comprend un dispositif de saisie d'image 11, un module de traitement d'image 12 noté EXTRACT, un module de transmission 13, et éventuellement un module supplémentaire d'acquisition de données 14 noté ACQ. Le dispositif de saisie d'image 11 peut être automatique, pour photographier ou filmer une cible qui est située dans son champ optique, et recommencer chaque fois qu'une nouvelle cible a pénétré dans ce champ optique. Alternativement, le dispositif de saisie d'image 11 peut être activé par un dispositif annexe, tel que le module d'acquisition de données 14. Par exemple, la station de terrain 1 peut être une station de mesure automatique de vitesses de véhicules qui circulent sur une route. Dans ce cas, le module 14 peut être un cinémomètre qui fonctionne en surveillance continue, et qui active une nouvelle saisie d'image par le dispositif 11 dès que la vitesse d'un véhicule qui est présent dans le champ optique est détectée supérieure à une limite autorisée. Pour d'autres fonctionnements dans le domaine de la circulation routière, le module 14 peut être une caméra à temps de vol, un système laser ou une boucle au sol. La référence I désigne une image quelconque qui est ainsi produite par le dispositif 11, parmi une série d'images qui sont produites successivement.

Pour l'utilisation de l'invention, les images I montrent toutes au moins une cible, et toutes les cibles concernées par l'invention possèdent une zone d'identification qui présente des caractéristiques connues et communes à toutes les cibles. Dans l'exemple du contrôle routier déjà mentionné, les cibles sont les véhicules, et la zone d'identification de chaque cible est une des plaques d'immatriculation du véhicule, ou contient cette plaque d'immatriculation avec d'autres éléments supplémentaires du véhicule. Les chiffres et lettres du numéro d'immatriculation de chaque véhicule constituent alors des caractères de distinction qui permettent de différencier un véhicule par rapport à un autre. Des éléments supplémentaires du véhicule peuvent aussi constituer des caractères de distinction additionnels, ou même alternatifs à certains chiffres ou lettres du numéro d'immatriculation. De tels éléments supplémentaires sont par exemple, de façon non limitative : un tiret qui est inscrit sur la plaque, un écusson ou un blason qui est porté par le véhicule, une partie de calandre ou de carrosserie, une salissure ou un défaut qui est présent sur le véhicule, etc. De façon générale, les caractères de distinction de chaque cible qui sont contenus dans sa zone d'identification, ne sont pas nécessairement des caractères alphanumériques ou qui sont lisibles directement. Toutefois, ils permettent de distinguer deux cibles qui sont différentes et d'affirmer que deux vues qui contiennent ces caractères concernent la même cible.

Le module de traitement d'image 12 est connecté en entrée au dispositif de saisie d'image 11 pour recevoir les images saisies I. Il est adapté pour rechercher et détecter dans chaque image I la présence d'au moins une zone d'identification d'après les caractéristiques connues de telles zones d'identification. Le module 12 isole alors dans l'image I une portion d'image IT qui contient la zone d'identification détectée, ou l'une des zones d'identification détectées. De préférence, la portion d'image IT qui est isolée est limitée en taille, en fonction des dimensions apparentes de la zone d'identification dans l'image I. La taille de la portion d'image IT peut être ajustée pour contenir tous les caractères de distinction de la zone d'identification, tout en réduisant des débordements de la portion d'image au-delà de la zone d'identification. Par exemple, la portion d'image IT peut avoir une limite périphérique rectangulaire qui est circonscrite à une limite externe de la zone d'identification détectée. A titre d'exemple, chaque image I peut correspondre à une trame d'image de 7800 x 1200 points d'image, et chaque portion d'image IT qui est isolée par le module 12 peut avoir des dimensions inférieures à 100 x 400 points d'image, voire inférieures ou égales à 50 x 200 points d'image. Pour l'application de contrôle routier, de tels modules de détection des plaques d'immatriculation dans des images sont connus de l'Homme du métier.

Le module de traitement d'image 12 produit en sortie les portions d'images IT, de préférence dans un format de codage d'image, notamment un espace de codage colorimétrique, qui est identique à celui des images initiales I. Aucune perte d'information d'image n'est provoquée de cette façon pour les portions d'images IT, si bien que les caractères de distinction peuvent être contenus dans les portions d'images IT avec la même qualité d'imagerie que dans les images I. Eventuellement, plusieurs portions d'images IT peuvent être isolées par le module 12 à partir d'une même image initiale I, chaque portion d'image contenant alors une zone différente d'identification de cible.

Le module de transmission 13 transmet alors les portions d'images IT à une unité de comparaison d'images 10. Tout mode de transmission peut être utilisé, avec ou sans compression, ainsi qu'avec ou sans perte d'information. De préférence, les portions d'images IT sont transmises sans perte d'information d'image, si bien que l'unité 10 peut recevoir les portions d'images IT avec la même qualité d'imagerie que les images I telles qu'elles ont été saisies par le dispositif 11. Par exemple, les portions d'images IT peuvent être transmises dans le format JPEG 2000 à profil sans perte entre la station de terrain 1 et l'unité de comparaison d'images 10. Pour l'application de contrôle routier, l'unité de comparaison d'images 10 peut être localisée dans une gendarmerie qui est responsable du tronçon de route sur lequel contrôle est effectué, ou dans un site central national dans le cas d'un système de contrôle central isé.

Le module d'acquisition de données 14 peut être synchronisé avec le dispositif de saisie d'image 11 pour produire des données qui sont ensuite attachées à chaque image saisie I. La station de terrain 1 est alors adaptée pour attacher à chaque portion d'image IT certaines au moins des données initialement attachées à l'image I dont est extraite la portion d'image IT. Ces données, qui sont notées DATA sur la figure 1, sont aussi transmises à l'unité de comparaison d'images 10, par exemple en même temps que la portion d'image IT concernée. Pour l'application du contrôle routier, et lorsque le module 14 est un cinémomètre, notamment un cinémomètre à effet Doppler, les données qui sont produites par ce module peuvent comprendre le résultat de la mesure de la vitesse du véhicule, le lieu et l'heure de cette mesure, voire des données supplémentaires sur la taille du véhicule, des couleurs de celui-ci, des contours de marquages ou des inscriptions qui sont visibles sur le véhicule, des caractéristiques sonores du véhicule, etc. Certaines de ces données supplémentaires peuvent notamment être lues dans l'image I par le module de traitement d'image 12.

Un nombre quelconque de stations de terrains 1, 2, 3... ayant chacune les caractéristiques qui viennent d'être décrites pour la station 1, peuvent être connectées à l'unité de comparaison d'images 10. Ces stations de terrains peuvent être identiques ou non entre elles. Le type de connexion de transmission entre chaque station de terrain 1, 2, 3... et l'unité 10 peut être quelconque, tout en étant compatible avec des formats pour les portions d'images IT qui sont adaptés au fonctionnement de l'unité 10. De préférence, les formats des portions d'images IT qui sont produites et transmises par toutes les stations de terrains 1, 2, 3... peuvent être identiques. En particulier, la connexion de transmission entre chaque station de terrain 1, 2, 3... et l'unité de comparaison d'images 10 peut être filaire électrique, par fibre optique, par transmission radio, y compris par un réseau radiocellulaire, etc. L'ensemble des stations de terrains 1, 2, 3... qui sont connectées avec l'unité de comparaison d'images 10 constitue avec celle-ci un système de regroupement de données conforme à l'invention. Eventuellement, une même station de terrain peut aussi être en relation de transmission avec plusieurs unités de comparaison d'images.

De façon générale, le module d'acquisition de données 14 peut être situé dans chaque station de terrain ou à tout autre endroit du système. En plus ou à la place des données supplémentaires qui sont produites par le module d'acquisition 14 et/ou le module de traitement d'image 12 au niveau de chaque station de terrain 1, 2, 3..., d'autres données peuvent être produites au niveau de l'unité de comparaison d'images 10 en liaison avec chacune des portions d'images IT qui sont reçues par cette unité 10. De telles données qui sont produites par l'unité 10 et attachées à une portion d'image IT, sont attachées par équivalence à l'image I dont a été extraite la portion d'image IT. Dans ce cas, le module 14 est situé au sein de l'unité 10.

L'unité de comparaison d'images 10 peut fonctionner en comparant les portions d'images IT qui sont reçues, en les admettant par paires de portions d'images pour chaque opération de comparaison. Autrement dit, une première étape exécutée au sein de l'unité 10 peut consister à sélectionner deux des portions d'images IT reçues pour les comparer ensuite l'une à l'autre. Cette comparaison a pour but de rechercher une coïncidence d'apparence, et notamment une coïncidence de forme, entre les caractères de distinction qui sont contenus dans l'une de ces portions d'images et ceux qui sont contenus dans l'autre. De façon générale, les portions d'images IT qui forment ensemble une paire pour la recherche de coïncidence peuvent provenir d'une même station de terrain, ou de deux stations de terrains différentes. Lorsque deux stations de terrains sont utilisées, chaque paire de portions d'images IT qui est constituée pour l'opération de comparaison peut être sélectionnée de sorte que les deux portions d'images proviennent chacune systématiquement de l'une et de l'autre des deux stations de terrains. Lorsque plus de deux stations de terrains sont utilisées, celles-ci peuvent être sélectionnées en utilisant tout algorithme approprié pour constituer les paires de portions d'images qui sont soumises à la recherche de coïncidence. Ainsi, le transit d'une même cible peut être recherché à tous les endroits d'installation des stations de terrains, ou bien seulement à une sélection restreinte de ceux-ci. Pour des applications du domaine de la circulation routière, il peut être préférable de sélectionner aussi les portions d'image IT qui sont comparées, de sorte que les deux portions d'image d'une même paire proviennent d'images qui montrent chacune un véhicule dans le même sens. Autrement dit, les deux portions d'images montrent des plaques d'immatriculation avant, ou les deux portions d'images montrent des plaques d'immatriculation arrière. En effet, une paire pour laquelle les deux images montrent respectivement la plaque d'immatriculation avant pour l'une des portions d'images, et la plaque d'immatriculation arrière pour l'autre portion d'image, pourrait aboutir à un résultat de comparaison du véhicule faux si les deux plaques sont différentes sur le même véhicule, ou si une salissure qui est présente sur l'une des plaques et pas l'autre aboutit à un résultat négatif pour la coïncidence, alors que les numéros d'immatriculation qui sont inscrits sur les deux plaques sont eux-mêmes identiques. Pour cela, une des données qui sont attachées à chaque image peut comprendre l'indication de la vue du véhicule par l'avant ou par l'arrière.

De façon préférée, l'unité 10 peut d'abord effectuer une correction de l'une au moins des portions d'images IT de chaque paire pour amener les zones d'identification qui sont contenues dans ces portions d'images à des dimensions identiques et à un angle de vue qui est commun. Par exemple, une telle correction peut être effectuée en détectant les contours de la zone d'identification dans chaque portion d'image IT. Puis, une transformation homographique peut être appliquée à l'une des deux portions d'images IT pour la convertir en une nouvelle portion d'image corrigée, dans laquelle la zone d'identification présente des dimensions qui sont identiques à celles de l'autre portion d'image de la paire. Alternativement, la transformation homographique qui est appliquée à l'une des deux portions d'images IT de la paire peut être déterminée à partir des tailles apparentes des caractères de distinction dans chaque portion d'image. Une telle transformation homographique peut être combinée avec une interpolation spatiale, notamment pour obtenir un recalage sub-pixellique, c'est-à-dire avec une précision qui est plus fine que la dimension élémentaire des points d'image.

Une correction d'intensité et/ou de contraste peut aussi être appliquée à l'une au moins des deux portions d'images IT de chaque paire, pour amener ces paramètres d'imagerie à des valeurs qui sont identiques pour les deux portions d'images de la paire.

Préférablement, pour chaque correction qui est effectuée, cette correction est appliquée à celle des deux portions d'images IT de la paire en cours de traitement qui possède la qualité d'imagerie la moins bonne, ou la meilleure, par rapport à ce paramètre. Par exemple, un grossissement peut être appliqué préférentiellement à la portion d'image dans laquelle les caractères de distinction sont initialement les plus petits. Par contre, une correction de contraste, et notamment une correction de saturation, peut être appliquée préférentiellement à celle des deux portions d'images qui présente la saturation la plus faible, pour améliorer la ressemblance entre les portions d'images IT mais sans ajouter d'information qui pourrait être erronée.

Lorsque des parties des caractères de distinction apparaissent floues, le niveau de flou de ces parties peut être déterminé et appliqué à la portion d'image IT la plus nette encore pour améliorer leur ressemblance. Mais il est aussi possible d'améliorer la netteté d'une partie des caractères de distinction de l'une des portions d'image, en la ramenant au niveau de netteté de l'autre portion d'image pour des parties correspondantes des caractères de distinction.

Ces corrections peuvent être exécutées par le module de correction 10a qui est indiqué sur la figure 1, et noté CORRECTION.

Le module 10b, noté COMPARAISON, détermine ensuite un niveau de coïncidence entre les caractères de distinction qui sont contenus dans l'une et l'autre portion d'image IT de chaque paire. Tout algorithme de comparaison de caractères qui est connu de l'Homme du métier peut être utilisé. Un tel algorithme peut procéder en comparant directement entre elles les formes des caractères de distinction. Le résultat de la recherche de coïncidence qui est produit par le module 10b peut être binaire, c'est-à-dire positif si la coïncidence est vérifiée pour tous les caractères de distinction qui sont contenus dans les deux portions d'images, ou négatif dans le cas contraire. Alternativement, le module 10b peut produire en résultat un score de coïncidence, à partir duquel la coïncidence peut être déclarée ou niée, ou à partir duquel la paire de portions d'images peut encore être orientée vers une analyse complémentaire. Une telle analyse complémentaire peut être réalisée par un autre module de recherche de coïncidence (non représenté), ou en présentant des deux portions d'images à un opérateur. Un avantage important de l'invention provient du fait que la recherche de coïncidence entre les portions d'images ne procède pas par une lecture des caractères de distinction, mais par une comparaison entre leurs apparences respectives dans les portions d'images. En particulier, dans le cas de caractères alphanumériques, ceux-ci ne sont pas lus, mais leurs graphismes sont comparés entre les portions d'images IT. De cette façon, le taux d'erreur pour les coïncidences qui sont ainsi déclarées positives ou négatives peut être très inférieur aux valeurs de taux d'erreur qui sont relatifs aux résultats de lecture des caractères de distinction.

Le module 10c effectue alors un regroupement des données qui sont attachées aux portions d'images IT pour lesquelles la coïncidence des caractères de distinction a été déclarée positive par le module 10b. Ce regroupement concerne les données des portions d'images d'une même paire, mais il peut être prolongé aux données de portions d'images IT qui sont reliées par un enchaînement de paires pour lesquelles les résultats de coïncidence sont tous positifs.

Enfin, le module 10d peut sélectionner l'un des ensembles de données qui sont ainsi regroupées, pour le présenter à un opérateur ou pour appliquer tout traitement complémentaire en fonction de l'application de l'invention qui est mise en œuvre.

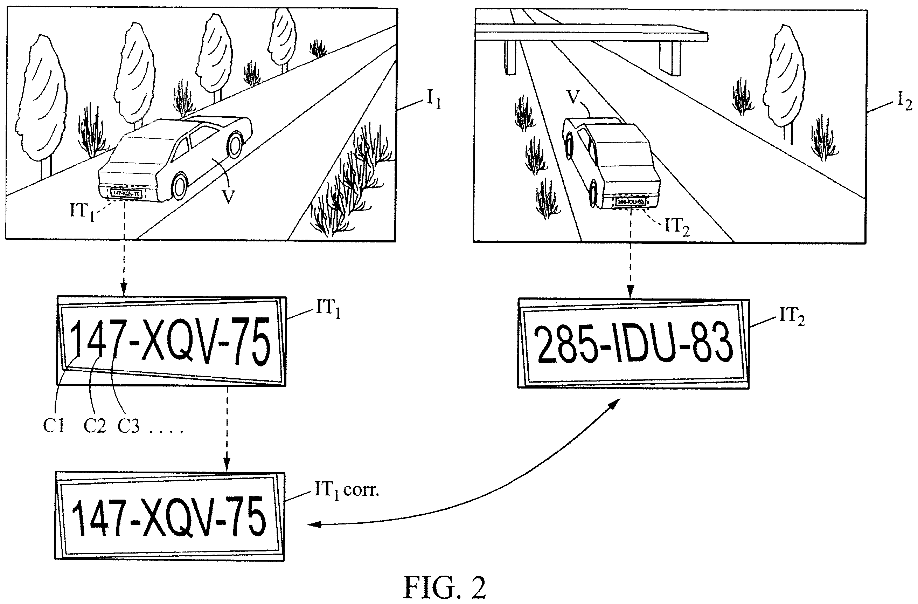

Les quatre premières applications de l'invention qui sont maintenant décrites appartiennent au domaine du contrôle de la circulation routière. Chaque cible est alors un véhicule V qui circule dans une portion de réseau routier, sur une route ou un tronçon de route. La figure 2 illustre l'extraction de portions d'images pour ces applications, telle que cette extraction peut être réalisée par les modules de traitement d'images 12 de sorte que chaque portion d'image contienne la plaque d'immatriculation d'un véhicule. I₁ et I₂ sont deux images qui ont été saisies par des dispositifs 11 séparés et installés à des points de passage différents. Les caractères d'immatriculation C1, C2, C3,... qui sont inscrits sur les plaques d'immatriculation d'un véhicule V peuvent former certains au moins des caractères de distinction qui sont utilisés, mais il est rappelé que d'autres caractères de distinction peuvent aussi être utilisés, comme indiqué plus haut. Les deux portions d'images IT₁ et IT₂ sont respectivement extraites des images I₁ et I₂, et les plaques d'immatriculation qui sont contenues dans les portions d'images IT₁ et IT₂ apparaissent selon des angles de vues différents, en fonction des conditions d'installation de chaque dispositif de saisie d'image. Par exemple, la plaque d'immatriculation dans la portion d'image IT₂ peut être vue de face sans déformation, alors que celle dans la portion d'image IT₁ peut être vue de façon oblique avec une déformation de perspective. Une transformation homographique qui est appliquée à la portion d'image IT₁ permet alors de compenser l'effet de perspective initial. La coïncidence d'apparence et/ou de forme est alors recherchée entre la portion d'image ainsi corrigée IT_{1 corr} et la portion d'image IT₂ telle que celle-ci a été directement extraite de l'image I₂. Bien que cet exemple illustré ne montre qu'une correction de différence d'angles de vues entre les images I₁ et I₂, il est entendu que d'autres corrections peuvent être appliquées simultanément ou de la même façon, telles que des corrections de différence d'éloignement des véhicules par rapport aux dispositifs de saisie d'images, des corrections de différence de contraste, de différence de luminosité, de rendu de couleurs, etc.

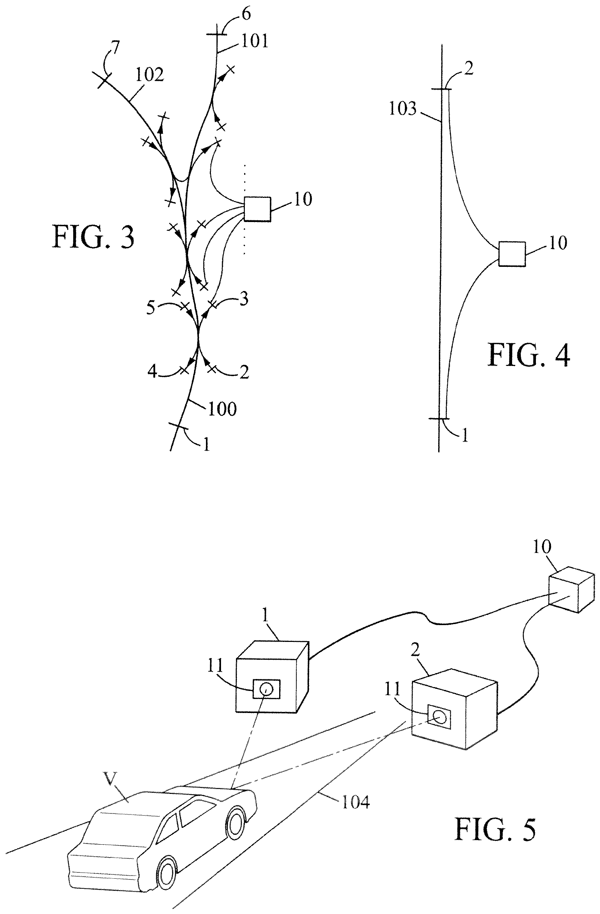

La première application, qui est illustrée par la figure 3, concerne la détermination du trajet qui est suivi par chaque véhicule dans une portion de réseau routier. Par exemple, la portion de réseau routier peut contenir trois branches d'autoroutes 100, 101 et 102 qui sont interconnectées. Les images I sont saisies à des points de passage séparés dans cette portion de réseau routier, par des dispositifs de saisie d'images qui sont disposés en ces points au sein de stations de terrains 1, 2,..., 6, 7,... Ces stations de terrains peuvent être situées aux entrées et sorties des portions d'autoroutes 100, 101 et 102, mais aussi à des positions intermédiaires, en étant toutes connectées à l'unité de comparaison d'images 10. Dans chaque station de terrain, le module 14 peut être un détecteur de véhicules qui déclenche le dispositif de saisie d'image 11 chaque fois qu'un nouveau véhicule traverse le point de passage correspondant. Les données qui sont attachées à chaque image saisie I, puis à chaque portion d'image qui en est extraite, comprennent au moins une référence du point de passage auquel l'image a été saisie. L'invention permet d'obtenir la liste des références de tous les points de passage qui ont été franchis par un même véhicule, en tant que signature du trajet qui a été suivi par le véhicule. Ces références des points de passage sont regroupées par le module 10c conformément à une (des) coïncidence(s) d'apparence pour les caractères de distinction qui sont contenus dans les portions d'images saisies respectivement par les dispositifs 11. Il est alors possible d'établir un coût d'utilisation de la portion de réseau routier qui dépend du trajet suivi.

La deuxième application peut être un contrôle de la vitesse de chaque véhicule V, par exemple à un point de passage intermédiaire sur la portion d'autoroute 100. Le module 14 de la station de terrain qui est installée à ce point de passage intermédiaire peut être un cinémomètre à effet Doppler, et la donnée qui est constituée par le résultat de la mesure de vitesse est regroupée avec la référence de la sortie d'autoroute où le même véhicule a été ensuite saisi en image. Ce regroupement de données est alors transmis en temps réel à la sortie d'autoroute empruntée par le véhicule, où celui-ci peut être intercepté.

La troisième application, qui est illustrée par la figure 4, concerne la mesure d'une vitesse moyenne de chaque véhicule V sur un tronçon de route entre deux points de passage. La référence 103 désigne le tronçon de route qui est limité par les deux points de passage séparés où sont situées respectivement les stations de terrains 1 et 2, celles-ci étant encore connectées à l'unité de comparaison d'images 10. Le module d'acquisition de données 14 de chaque station de terrain 1, 2 est adapté pour attacher à chaque image saisie I au moins une donnée d'heure de saisie de cette image, et une référence du point de passage auquel elle a été saisie. L'unité de comparaison d'images 10 regroupe alors les données d'heures et les références des points de passage relatifs à un même véhicule, conformément à la coïncidence d'apparence entre les caractères de distinction qui sont contenus dans les portions d'images transmises respectivement par les stations de terrains 1 et 2. A partir de ces données, l'unité 10 peut calculer une vitesse moyenne du véhicule. Eventuellement, un tel ensemble pour mesurer les vitesses moyennes peut comporter plus de deux stations de terrains, et chaque vitesse peut être calculée pour un véhicule entre deux quelconques de celles-ci.

La quatrième application, qui est illustrée par la figure 5, concerne la mesure des vitesses de véhicules par effet stéréoscopique. Pour cela, le système de regroupement de données attachées à des images comprend au moins les deux dispositifs de saisie d'images 11 séparés, qui peuvent être compris dans les stations de terrains 1 et 2. Ces dispositifs 11 sont destinés à être installés à un point de passage des véhicules sur la route 104, de sorte qu'un véhicule V soit à l'intérieur d'un champ optique commun aux dispositifs de saisie d'images lorsque les images sont saisies. Des positions du véhicule V dans les images qui sont saisies respectivement et simultanément par les deux dispositifs de saisie d'images 11 permettent alors de déterminer une position instantanée du véhicule V sur la route 104 par effet stéréoscopique. Chaque module d'acquisition de données 14 des stations 1 et 2 est adapté pour attacher à chaque image saisie I au moins une donnée de la position du véhicule V dans l'image et éventuellement aussi une donnée d'heure de saisie de cette image. La position du véhicule V sur la route 104 est ensuite calculée à partir des données de position qui sont attachées à deux images I saisies à un même instant respectivement par les deux dispositifs 11, et qui ont une coïncidence d'apparence entre les caractères de distinction contenus dans les portions d'images IT issues des ces images. La vitesse du véhicule V est ensuite calculée à partir de ces positions sur la route 104et des données d'heures regroupées conformément à une autre coïncidence d'apparence des caractères de distinction entre des images qui ont été saisies à des instants différents.

D'autres applications de l'invention peuvent aussi concerner des caractérisations de trajectoires de cibles, par exemple pour détecter des franchissements de lignes continues ou des circulations sur la bande d'arrêt d'urgence, encore dans le domaine du contrôle routier.

D'autres applications peuvent aussi concerner le contrôle d'accès par regroupement d'images de surfaces cutanées qui sont relatives à un même individu. Pour de telles applications, chaque cible est un individu, et chaque image peut être une saisie d'empreinte digitale ou palmaire. La zone d'identification est alors une portion de surface cutanée de l'individu, et les caractères de distinction sont des motifs de sillons ou des éléments cutanés, tels que des emplacements de pores ou de lignes cutanées. Les données attachées à chaque image peuvent encore comprendre une référence d'un lieu de saisie de l'image, avec une donnée d'heure de la saisie. Plusieurs stations de terrains peuvent être situées à des points d'accès d'un bâtiment, chacune pourvue d'un capteur d'empreinte digitale formant un dispositif de saisie d'image. La mise en œuvre de l'invention permet alors de déterminer le trajet d'un individu à l'intérieur du bâtiment, par regroupement des données de passage qui sont produites par chaque station de terrain. Le regroupement est effectué en fonction de la coïncidence qui est trouvée entre les motifs de sillons ou les éléments cutanés qui sont contenus dans les images d'empreintes saisies par les capteurs d'empreintes.

D'autres applications encore peuvent concerner la comparaison biométrique. Dans ce cas, chaque cible est une image de surface cutanée, la zone d'identification est une portion de l'image de surface cutanée, et les caractères de distinction comprennent des motifs de sillons ou des éléments cutanés. Une telle application peut être la recherche d'une empreinte digitale dans un fichier d'empreintes connues, par exemple en criminologie.

Enfin, il est entendu que l'invention peut être appliquée de même à de nombreuses autres applications, qui ne sont pas limitées aux domaines du contrôle de vitesse dans la circulation routière, du contrôle d'accès ou de la comparaison biométrique. Elle peut être appliquée notamment à la comparaison de tatouages, de traces de semelles, de traces de pneus, etc.

Par ailleurs, il est aussi rappelé que chaque module d'acquisition qui produit des données attachées aux images, n'est pas nécessairement situé à proximité d'un dispositif de saisie d'image, mais il peut être aussi bien situé à proximité ou au sein de l'unité de comparaison d'images.

## Revendications

1. Procédé de regroupement de données attachées à des images, comprenant les étapes suivantes :
/1/ saisir des images (I) par un dispositif (11) de saisie d'au moins une station (1) de terrain, dont chacune est une vue d'au moins une cible pourvue d'une zone d'identification de ladite cible, ladite zone d'identification contenant des caractères de distinction permettant de distinguer ladite cible parmi d'autres cibles, et les zones d'identification respectives des cibles ayant des caractéristiques communes ;
/2/ en utilisant les caractéristiques communes des zones d'identification, extraire au moins une portion d'image (IT) de chaque image (I) par un module (12) de traitement d'image de la au moins une station (1) de terrain, ladite portion d'image contenant la zone d'identification et étant plus petite que ladite image ;
/3/ transmettre les portions d'images (IT) extraites à une unité de comparaison d'images ;
**caractérisé par** l'étape suivante:
/4/ en utilisant l'unité de comparaison d'images, rechercher une coïncidence d'apparence pour les caractères de distinction entre des portions d'images (IT) différentes extraites à l'étape /2/, et regrouper entre elles des données attachées à celles des images qui ont abouti à un résultat de coïncidence positif.

2. Procédé selon la revendication 1, suivant lequel l'étape /4/ comprend au moins une correction d'imagerie appliquée à au moins une des portions d'images (IT) entre lesquelles la coïncidence d'apparence est recherchée pour les caractères de distinction, mais pas à une autre des dites portions d'images avec laquelle la coïncidence d'apparence est recherchée, et ladite correction d'imagerie étant déterminée pour compenser au moins partiellement des variations de conditions de saisie d'image entre les dites portions d'images, et la coïncidence d'apparence est recherchée en utilisant la portion d'image corrigée et la portion d'image non-corrigée.

3. Procédé selon la revendication 1 ou 2, suivant lequel l'étape /4/ comprend au moins deux corrections d'imagerie appliquées chacune à au moins une des portions d'images (IT) entre lesquelles la coïncidence d'apparence est recherchée pour les caractères de distinction, mais pas à une autre des dites portions d'images avec laquelle la coïncidence d'apparence est recherchée, chaque correction d'imagerie concernant un paramètre d'imagerie différent, et la portion d'image qui est corrigée pour l'un des paramètres d'imagerie étant différente de la portion d'image qui est corrigée pour l'autre des dits paramètres d'imagerie.

4. Procédé selon la revendication 3, suivant lequel ledit au moins un paramètre d'imagerie est sélectionné parmi :
- un contraste des caractères de distinction dans la portion d'image ;
- une dimension apparente des caractères de distinction dans la portion d'image ;
- un angle de prise de vue par rapport à une direction perpendiculaire à la zone d'identification sur la cible ; et
- une netteté des caractères de distinction dans la portion d'image.

5. Procédé selon l'une quelconque des revendications 1 à 4, mis en œuvre pour caractériser une trajectoire d'une des cibles.

6. Procédé selon l'une des revendications 1 à 5, mis en œuvre pour déterminer un trajet suivi par un véhicule dans une portion de réseau routier, suivant lequel les images sont saisies à l'étape /1/ en utilisant plusieurs dispositifs de saisie d'images, et la coïncidence d'apparence pour les caractères de distinction est recherchée à l'étape /4/ entre des portions d'images extraites d'images qui ont été saisies respectivement par des dispositifs différents, parmi les dispositifs utilisés et suivant lequel :
chaque cible est un véhicule (V) circulant dans la portion de réseau routier (100, 101, 102), des caractères d'immatriculation inscrits sur une plaque d'immatriculation du véhicule formant une partie au moins des caractères de distinction,
les images sont saisies à des points de passage séparés dans la portion de réseau routier, et les données attachées à chaque image comprennent au moins une référence du point de passage auquel ladite image a été saisie ; et
une signature du trajet suivi par un même véhicule comprend les références des points de passage regroupées conformément à la coïncidence d'apparence entre les caractères de distinction contenus dans des portions d'images qui ont été saisies respectivement par plusieurs des dispositifs de saisie d'images.

7. Procédé selon l'une quelconque des revendications 1 à 5, mis en œuvre pour mesurer une vitesse moyenne d'un véhicule sur un tronçon de route entre deux points de passage, suivant lequel les images sont saisies à l'étape /1/ en utilisant plusieurs dispositifs de saisie d'images, et la coïncidence d'apparence pour les caractères de distinction est recherchée à l'étape /4/ entre des portions d'images extraites d'images qui ont été saisies respectivement par des dispositifs différents, parmi les dispositifs utilisés et suivant lequel :
chaque cible est un véhicule (V) circulant sur le tronçon de route (103), les caractères d'immatriculation inscrits sur une plaque d'immatriculation du véhicule formant une partie au moins des caractères de distinction,
les images sont saisies par au moins deux dispositifs de saisie d'images situés à des points de passage séparés le long du tronçon de route, et les données attachées à chaque image comprennent au moins une donnée d'heure de saisie de ladite image et une référence du point de passage auquel ladite image a été saisie ; et
la vitesse moyenne du véhicule est calculée à partir des données d'heures de saisie des images et des références des points de passage regroupées conformément à une coïncidence d'apparence pour les caractères de distinction entre des portions d'images qui ont été saisies respectivement par les deux dispositifs de saisie d'images.

8. Procédé selon l'une quelconque des revendications 1 à 5, mis en œuvre pour mesurer une vitesse d'un véhicule sur une route par effet stéréoscopique, suivant lequel les images sont saisies à l'étape /1/ en utilisant plusieurs dispositifs de saisie d'images, et la coïncidence d'apparence pour les caractères de distinction est recherchée à l'étape /4/ entre des portions d'images extraites d'images qui ont été saisies respectivement par des dispositifs différents, parmi les dispositifs utilisés et suivant lequel :
chaque cible est un véhicule (V) circulant sur la route (104), les caractères d'immatriculation inscrits sur une plaque d'immatriculation du véhicule formant une partie au moins des caractères de distinction,
les images sont saisies par au moins deux dispositifs de saisie d'images, séparés et disposés de sorte que le véhicule soit à l'intérieur d'un champ optique commun aux dispositifs de saisie d'images lorsque les images sont saisies, et des positions du véhicule dans les images saisies respectivement et simultanément par les deux dispositifs de saisie d'images permettent de déterminer une position instantanée dudit véhicule sur la route d'après l'effet stéréoscopique, et les données attachées à chaque image comprenant au moins une donnée de la position du véhicule dans ladite image et une donnée d'heure de saisie de ladite image ; et
la position du véhicule sur la route étant calculée à partir des données de position attachées à deux images saisies à un même instant respectivement par les deux dispositifs de saisie d'images, conformément à une coïncidence d'apparence entre les caractères de distinction contenus dans les portions d'images issues des dites images, et pour calculer la vitesse du véhicule à partir des dites positions sur la route et des données d'heures regroupées conformément à une autre coïncidence d'apparence entre des images qui ont été saisies à des instants différents.

9. Procédé selon l'une quelconque des revendications 1 à 5, mis en œuvre pour effectuer un contrôle d'accès , suivant lequel chaque cible est un individu, la zone d'identification est une portion de surface cutanée de l'individu, et les caractères de distinction comprennent des motifs de sillons ou des éléments cutanés.

10. Procédé selon l'une quelconque des revendications 1 à 5, mis en œuvre pour effectuer une comparaison biométrique, suivant lequel chaque cible est une image de surface cutanée, la zone d'identification est une portion de ladite image de surface cutanée, et les caractères de distinction comprennent des motifs de sillons ou des éléments cutanés.

11. Système de regroupement de données attachées à des images comprenant :
- au moins un dispositif de saisie d'image (11), adapté pour saisir des images (I) de cibles ;
- au moins un module de traitement d'image (12), couplé respectivement à chaque dispositif de saisie d'image, et adapté pour extraire de chaque image (I), au moins une portion d'image (IT) plus petite que ladite image et contenant une zone d'identification d'une cible contenue dans ladite image, à partir de caractéristiques communes aux zones d'identification des cibles ;
- une unité de comparaison d'images (10) ;
- au moins un module (13) de transmission des portions d'images, connecté pour transmettre les portions d'images extraites par le module de traitement d'image à l'unité de comparaison d'images ; et
- au moins un module d'acquisition de données (14), adapté pour attacher des données à chaque image saisie ;
**caractérise en ce que**:
l'unité de comparaison d'images (10) est adaptée pour rechercher une coïncidence d'apparence pour des caractères de distinction contenus dans les zones d'identification, entre des portions d'images différentes extraites par le module de traitement d'image (12), et pour regrouper entre elles les données attachées à celles des images qui ont abouti à un résultat de coïncidence positif.

12. Système selon la revendication 11, adapté pour mettre en œuvre un procédé de regroupement de données attachées à des images, qui est conforme à l'une quelconque des revendications 1 à 5.

13. Système selon la revendication 11 ou la revendication 12, compris dans un ensemble de suivi de véhicules pour caractériser des trajets suivis par les véhicules dans une portion de réseau routier (100, 101, 102) ;
le système comprenant au moins trois dispositifs de saisie d'images (11) destinés à être installés à des points de passage séparés dans la portion de réseau routier ;
chaque module de traitement d'image (12) étant adapté pour extraire des portions d'images (IT) contenant des plaques d'immatriculation de véhicules contenus dans les images (I) ;
ledit au moins un module d'acquisition de données (14) étant adapté pour attacher à chaque image saisie au moins une référence du point de passage auquel ladite image a été saisie ;
les caractères d'immatriculation inscrits sur une plaque d'immatriculation de chaque véhicule formant une partie au moins des caractères de distinction pour lesquels l'unité de comparaison d'images (10) recherche la coïncidence d'apparence ; et
l'ensemble étant adapté pour produire les références des points de passage regroupées conformément à une coïncidence d'apparence entre caractères de distinction contenus dans des portions d'images saisies respectivement par plusieurs des dispositifs de saisie d'images, en tant que signature du trajet suivi par un même véhicule.

14. Système selon la revendication 11 ou la revendication 12, compris dans un ensemble de mesure de vitesses moyennes de véhicules circulant sur un tronçon de route ;
le système comprenant au moins deux dispositifs de saisie d'images (11) destinés à être installés à des points de passage séparés le long du tronçon de route (103) ;
chaque module de traitement d'image (12) étant adapté pour extraire des portions d'images (IT) contenant des plaques d'immatriculation de véhicules contenus dans les images (I) ;
ledit au moins un module d'acquisition de données (14) étant adapté pour attacher à chaque image saisie au moins une donnée d'heure de saisie de ladite image et une référence du point de passage auquel ladite image a été saisie ;
les caractères d'immatriculation inscrits sur une plaque d'immatriculation de chaque véhicule (V) formant une partie au moins des caractères de distinction pour lesquels l'unité de comparaison d'images (10) recherche la coïncidence d'apparence ; et
l'ensemble étant adapté pour calculer la vitesse moyenne d'un véhicule à partir des données d'heures de saisie des images et des références des points de passage regroupées conformément à une coïncidence d'apparence entre caractères de distinction contenus dans des portions d'images saisies respectivement par les deux dispositifs de saisie d'images.

15. Système selon la revendication 11 ou la revendication 12, compris dans un ensemble de mesure de vitesses de véhicules par effet stéréoscopique ;
le système comprenant au moins deux dispositifs de saisie d'images (11) destinés à être installés à un point de passage des véhicules, de sorte qu'un véhicule (V) soit à l'intérieur d'un champ optique commun aux dispositifs de saisie d'images lorsque les images sont saisies, et des positions dudit véhicule dans les images saisies respectivement et simultanément par les deux dispositifs de saisie d'images permettent de déterminer une position instantanée du véhicule sur la route par effet stéréoscopique ;
chaque module de traitement d'image (12) étant adapté pour extraire des portions d'images (IT) contenant des plaques d'immatriculation de véhicules contenus dans les images (I) ;
ladite au moins une unité d'acquisition de données (14) étant adaptée pour attacher à chaque image saisie au moins une donnée de la position du véhicule dans ladite image et une donnée d'heure de saisie de ladite image ;
les caractères d'immatriculation inscrits sur une plaque d'immatriculation du véhicule formant une partie au moins des caractères de distinction pour lesquels l'unité de comparaison d'images recherche la coïncidence d'apparence ; et
l'ensemble étant adapté pour calculer la position du véhicule sur la route à partir des données de position attachées à deux images saisies à un même instant respectivement par les deux dispositifs de saisie d'images, conformément à une coïncidence d'apparence pour les caractères de distinction entre des portions d'images issues des dites images, et pour calculer la vitesse du véhicule à partir des positions sur la route et des données d'heures regroupées conformément à un une autre coïncidence d'apparence entre des images qui ont été saisies à des instants différents.

## Patentansprüche

1. Verfahren der Gruppierung von an Bildern angehängten Daten, das folgende Schritte umfasst:
/1/ Erfassen von Bildern (I) durch ein Erfassungsgerät (11) von mindestens einer Feldstation (1), von denen jedes eine Ansicht von mindestens einem Ziel ist, das mit einem Identifikationsbereich für dieses Ziel versehen ist, wobei der genannte Identifikationsbereich Unterscheidungsmerkmale enthält, die erlauben, dieses Ziel von anderen Zielen zu unterscheiden und die entsprechenden Identifikationsbereiche der Ziele gemeinsame Merkmale aufweisen;
/2/ bei Verwendung der gemeinsamen Merkmale der Identifikationsbereiche mindestens einen Bildabschnitt (IT) jedes Bildes (I) durch ein Bildbearbeitungsmodul (12) von mindestens einer Feldstation (1) extrahieren, wobei dieser Bildabschnitt den Identifikationsbereich enthält und kleiner als das genannte Bild ist;
/3/ extrahierte Bildabschnitte (IT) an eine Bildvergleichseinheit übermitteln;
durch folgenden Schritt gekennzeichnet:
/4/ durch Verwendung der Bildvergleichseinheit eine Übereinstimmung für die Unterscheidungsmerkmale zwischen den verschiedenen Bildabschnitten (IT) suchen, die im Schritt /2/ extrahiert wurden und die Daten untereinander gruppieren, die an diejenigen Bilder angehängt waren, die zu einer positiven Übereinstimmung geführt haben.

2. Verfahren nach Anspruch 1, dem zufolge der Schritt /4/ mindestens eine Bildgebungskorrektur umfasst, die auf mindestens einen der Bildabschnitte (IT) angewendet wird, zwischen denen eine Übereinstimmung für die Unterscheidungsmerkmale gesucht wird, aber nicht auf einen anderen der genannten Bildabschnitte, mit denen eine Übereinstimmung gesucht wird, wobei die genannte Bildgebungskorrektur dazu bestimmt ist, zumindest teilweise Abweichungen unter den Bilderfassungsbedingungen der genannten Bildabschnitte zu kompensieren, und die Übereinstimmung wird unter Verwendung des korrigierten Bildabschnitts und des nicht korrigierten Bildabschnitts gesucht.

3. Verfahren nach Anspruch 1 oder 2, dem zufolge der Schritt /4/ mindestens zwei Bildgebungskorrekturen umfasst, die beide auf mindestens einen der Bildabschnitte (IT) angewendet werden, zwischen denen die Übereinstimmung für die Unterscheidungsmerkmale gesucht wird, aber nicht auf einen anderen der genannten Bildabschnitte, mit denen die Übereinstimmung für die Unterscheidungsmerkmale gesucht wird, wobei jede Bildgebungskorrektur einen anderen Bildgebungsparameter betrifft und der Bildteil, der für einen der Bildgebungsparameter korrigiert wird, anders ist als der Bildabschnitt, der für den anderen dieser Bildgebungsparameter korrigiert wird.

4. Verfahren nach Anspruch 3, dem zufolge mindestens ein Bildgebungsparameter unter den Folgenden ausgewählt wird:
- ein Kontrast der Unterscheidungsmerkmale in dem Bildabschnitt;
- eine sichtbare Dimension der Unterscheidungsmerkmale in dem Bildabschnitt;
- ein Blickwinkel in Bezug auf eine senkrechte Richtung zum Identifikationsbereich auf dem Ziel; und
- eine Schärfe der Unterscheidungsmerkmale in dem Bildabschnitt.

5. Verfahren nach einem der Ansprüche 1 bis 4, mit dem ein Weg beschrieben wird, den eines der Ziele zurücklegt.

6. Verfahren nach einem der Ansprüche 1 bis 5, mit dem die Strecke bestimmt wird, die ein Fahrzeug in einem Abschnitt des Straßennetzes nimmt, dem zufolge die Bilder in Schritt /1/ unter Verwendung mehrerer Bilderfassungsgeräte gemacht werden, und die Übereinstimmung für die Unterscheidungsmerkmale, wird in Schritt /4/ zwischen den Bildabschnitten gesucht, die aus Bildern extrahiert sind, die unter den verwendeten Geräten jeweils von verschiedenen Geräten erfasst wurden, und welchem zufolge:
Jedes Ziel ein Fahrzeug (V) ist, das in dem Abschnitt des Verkehrsnetzes fährt (100, 101, 102), wobei die auf dem Nummernschild eines Fahrzeugs stehenden Immatrikulationskennzeichen mindestens einen Teil der Unterscheidungsmerkmale bilden,
die Bilder werden in dem Abschnitt des Straßennetzes an getrennten Transitpunkten erfasst, und die Daten, die jedem Bild angehängt sind, umfassen mindestens eine Referenz des Transitpunktes, an dem das Bild erfasst wurde; und
eine Signatur der Strecke, die ein Fahrzeug zurücklegt, umfasst die Referenzen der Transitpunkte, die entsprechend der Übereinstimmung zwischen den Unterscheidungsmerkmalen gruppiert sind, die in den Bildabschnitten enthalten sind, die jeweils von mehreren Bilderfassungsgeräten gemacht wurden.

7. Verfahren nach einem der Ansprüche 1 bis 5, das der Messung der durchschnittlichen Geschwindigkeit eines Fahrzeuges auf einem Streckenabschnitt zwischen zwei Transitpunkten dient, dem zufolge die Bilder in Schritt /1/ unter Verwendung mehrerer Bilderfassungsgeräte gemacht werden, und in Schritt /4/ die Übereinstimmung für die Unterscheidungsmerkmale gesucht wird zwischen den Bildabschnitten, die aus Bildern extrahiert wurden, die unter den verwendeten Geräten jeweils von verschiedenen Geräten gemacht wurden, und dem zufolge:
jedes Ziel ein Fahrzeug (V) ist, das auf dem Streckenabschnitt (103) fährt, wobei die auf dem Nummernschild eines Fahrzeugs stehenden Immatrikulationskennzeichen mindestens einen Teil der Unterscheidungsmerkmale bilden,
die Bilder von mindestens zwei Bilderfassungsgeräten gemacht werden, die sich an getrennten Transitpunkten entlang des Streckenabschnitts befinden, und die jedem Bild anhängenden Daten umfassen mindestens die Angabe des Zeitpunktes, an dem das betreffende Bild gemacht wurde, und eine Referenz des Transitpunktes, an dem dieses Bild erfasst wurde; und
die durchschnittliche Geschwindigkeit des Fahrzeugs wird aufgrund des Zeitpunktes der Erfassung der Bilder und der Referenzen für die Transitpunkte berechnet die entsprechend einer Übereinstimmung für die Unterscheidungsmerkmale zwischen den Bildabschnitten gruppiert wurden, die jeweils von den zwei Bilderfassungsgeräten gemacht wurden.

8. Verfahren nach einem der Ansprüche 1 bis 5, das dazu dient, die Geschwindigkeit eines Fahrzeuges auf einer Straße durch stereoskopischen Effekt zu messen, dem zufolge die Bilder in Schritt /1/ unter Verwendung mehrerer Bilderfassungsgeräte gemacht werden, und die Übereinstimmung für die Unterscheidungsmerkmale in Schritt /4/ zwischen den Bildabschnitten gesucht wird, die aus Bildern extrahiert wurden, die unter den verwendeten Geräten jeweils von verschiedenen Geräten gemacht wurden, und dem zufolge:
jedes Ziel ein Fahrzeug (V) ist, das auf der Straße (104) fährt, wobei die auf dem Nummernschild eines Fahrzeugs stehenden Immatrikulationskennzeichen mindestens einen Teil der Unterscheidungsmerkmale bilden,
die Bilder von mindestens zwei getrennten Bilderfassungsgeräten gemacht werden, die so aufgestellt sind, dass das Fahrzeug sich bei Erfassung der Bilder innerhalb eines optischen Feldes befindet, das beiden Bilderfassungsgeräten gemein ist, und dass Positionen, die das Fahrzeug auf den jeweils und gleichzeitig von den beiden Bilderfassungsgeräten erfassten Bildern hat, ermöglichen, nach dem stereoskopischen Effekt sofort eine Position des betreffenden Fahrzeugs auf der Straße zu bestimmen, und die jedem Bild angehängten Daten umfassen mindestens eine Angabe über die Position des Fahrzeugs in dem jeweiligen Bild und eine Zeitangabe der Erfassung des jeweiligen Bildes; und
die Position des Fahrzeugs auf der Straße wird auf der Basis der Positionsdaten berechnet, die den zwei Bildern angehängt sind, die jeweils im gleichen Augenblick von den zwei Bilderfassungsgeräten gemacht wurden, entsprechend einer Übereinstimmung zwischen den Unterscheidungsmerkmalen, die in den Bildabschnitten enthalten sind, die aus den genannten Bildern stammen, und um die Geschwindigkeit des Fahrzeugs anhand der genannten Positionen auf der Straße und der Zeitangaben zu berechnen, die entsprechend einer weiteren Übereinstimmung zwischen den Bildern gruppiert sind, die zu unterschiedlichen Momenten gemacht wurden.

9. Verfahren nach einem der Ansprüche 1 bis 5, das der Durchführung einer Zugangskontrolle dient, dem zufolge jedes Ziel eine Person ist, der Identifikationsbereich ist ein Teil der Hautoberfläche der Person, und die Unterscheidungsmerkmale umfassen Furchenmuster oder Hautbestandteile.

10. Verfahren nach einem der Ansprüche 1 bis 5, das der Durchführung eines biometrischen Vergleichs dient, dem zufolge jedes Ziel ein Bild von der Hautoberfläche ist, der Identifikationsbereich ist ein Teil dieses Bildes der Hautoberfläche und die Unterscheidungsmerkmale umfassen Furchenmuster oder Hautbestandteile.

11. Gruppierungssystem von an Bildern angehängten Daten, das Folgendes umfasst:
- mindestens ein Bilderfassungsgerät (11), das geeignet ist, um Bilder (I) von Zielen zu erfassen;
- mindestens ein Bildbearbeitungsmodul (12), jeweils an jedes Bilderfassungsgerät gekoppelt und geeignet, um aus jedem Bild (I) mindestens einen Bildabschnitt (IT) zu extrahieren, der kleiner ist als das betreffende Bild und einen Identifikationsbereich eines Ziels enthält, der in dem betreffenden Bild enthalten ist, aufgrund von gemeinsamen Merkmalen der Identifikationsbereiche der Ziele;
- eine Bildvergleichseinheit (10);
- mindestens ein verbundenes Übertragungsmodul (13) für Bildabschnitte, um die vom Bildbearbeitungsmodul extrahierten Bildabschnitte an die Bildvergleichseinheit zu übertragen; und
- mindestens ein Datenerfassungsmodul (14), das geeignet ist, um an jedes erfasste Bild Daten anzuhängen;
**dadurch gekennzeichnet, dass**:
die Bildvergleichseinheit (10) geeignet ist, um eine Übereinstimmung für die in den Identifikationsbereichen enthaltenen Unterscheidungsmerkmale zu suchen, zwischen den verschiedenen Bildabschnitten, die von dem Bildbearbeitungsmodul (12) extrahiert wurden, und um die Daten untereinander zu gruppieren, die an die Bilder angehängt sind, die zu einem positiven Übereinstimmungsergebnis geführt haben.

12. System nach Anspruch 11, geeignet, um ein Gruppierungsverfahren für an Bilder angehängte Daten zu realisieren, das einem der Ansprüche 1 bis 5 entspricht.

13. System nach Anspruch 11 oder Anspruch 12, in einem Gesamtpaket der Beobachtung von Fahrzeugen enthalten, das die Strecken beschreiben soll, die von den Fahrzeugen in einem Abschnitt des Straßennetzes (100, 101, 102) zurückgelegt werden;
das System umfasst mindestens drei Bilderfassungsgeräte (11) die in dem Streckenabschnitt an getrennten Transitpunkten installiert werden sollen;
jedes Bildbearbeitungsmodul (12) muss dazu geeignet sein, Bildabschnitte (IT) mit darin enthaltenen Nummernschildern von Fahrzeugen zu extrahieren, die in den Bildern (I) enthalten sind;
mindestens ein Datenerfassungsmodul (14), das geeignet ist, um an jedes erfasste Bild mindestens eine Referenz über den Transitpunkt anzuhängen, an dem dieses Bild erfasst wurde;
die auf dem Nummernschild eines Fahrzeugs stehenden Immatrikulationskennzeichen bilden mindestens einen Teil der Unterscheidungsmerkmale, für die die Bildvergleichseinheit (10) eine Übereinstimmung sucht; und
das Ganze muss geeignet sein, um Referenzen der Transitpunkte zu produzieren, die entsprechend einer Übereinstimmung zwischen den Unterscheidungsmerkmalen gruppiert sind, die in den Bildabschnitten enthalten sind, die jeweils von mehreren Bilderfassungsgeräten gemacht wurden, als Signatur der Strecke, die ein einzelnes Fahrzeug zurückgelegt hat.

14. System nach Anspruch 11 oder Anspruch 12, enthalten in einem Gesamtpaket zur Messung der Durchschnittsgeschwindigkeiten von Fahrzeugen, die auf einem Streckenabschnitt fahren;
das System umfasst mindestens zwei Bilderfassungsgeräte (11), die an getrennten Transitpunkten entlang des Streckenabschnitts (103) installiert werden sollen;
jedes Bildbearbeitungsmodul (12) muss dafür geeignet sein, Bildabschnitte (IT) zu extrahieren, die Nummernschilder von Fahrzeugen enthalten, die in den Bildern enthalten sind (I);
das System umfasst mindestens ein Datenerfassungsmodul (14), das geeignet ist, an jedes erfasste Bild mindestens eine Angabe des Zeitpunktes, an dem dieses Bild gemacht wurde, und eine Referenz des Transitpunktes, an dem dieses Bild erfasst wurde, anzuhängen;
die auf dem Nummernschild jedes Fahrzeugs (V) stehenden Immatrikulationskennzeichen bilden mindestens einen Teil der Unterscheidungsmerkmale, für die die Bildvergleichseinheit (10) eine Übereinstimmung sucht; und
das Ganze muss geeignet sein, um die Durchschnittsgeschwindigkeit eines Fahrzeugs auf der Basis der Daten des Zeitpunkts, an dem die Bilder erfasst wurden und der Referenzen der Transitpunkte zu berechnen, die entsprechend der Übereinstimmung zwischen den Unterscheidungsmerkmalen gruppiert sind, die in den jeweils von den zwei Bilderfassungsgeräten gemachten Bildabschnitten enthalten sind.

15. System nach Anspruch 11 oder Anspruch 12, enthalten in einem Gesamtpaket der Messung von Fahrzeuggeschwindigkeiten durch stereoskopischen Effekt;
das System umfasst mindestens zwei Bilderfassungsgeräte (11), die so an einem Transitpunkt der Fahrzeuge installiert werden sollen, dass ein Fahrzeug (V) sich bei Erfassung der Bilder innerhalb eines optischen Feldes befindet, das beiden Bilderfassungsgeräten gemein ist, und dass Positionen, die das gleiche Fahrzeug auf den jeweils und gleichzeitig von den beiden Bilderfassungsgeräten erfassten Bildern hat, ermöglichen, nach dem stereoskopischen Effekt sofort eine Position des betreffenden Fahrzeugs auf der Straße zu bestimmen;
jedes Bildbearbeitungsmodul (12) muss dazu geeignet sein, Bildabschnitte (IT) mit darin enthaltenen Nummernschildern von Fahrzeugen zu extrahieren, die in den Bildern (I)enthalten sind;
das System umfasst mindestens eine Datenerfassungseinheit (14), die geeignet ist, an jedes erfasste Bild mindestens eine Angabe über die Position des Fahrzeugs in dem Bild und eine Angabe über den Zeitpunkt, an dem dieses Bild gemacht wurde, anzuhängen;
die auf dem Nummernschild eines Fahrzeugs stehenden Immatrikulationskennzeichen bilden mindestens einen Teil der Unterscheidungsmerkmale, für die die Bildvergleichseinheit eine Übereinstimmung sucht; und
das Ganze muss geeignet sein, um die Position des Fahrzeugs auf der Straße zu berechnen, und zwar auf der Basis der Positionsdaten, die an zwei Bilder angehängt sind, die jeweils im gleichen Moment von zwei Bilderfassungsgeräten gemacht wurden, entsprechend einer Übereinstimmung für die Unterscheidungsmerkmale zwischen den Bildabschnitten, die aus diesen Bildern stammen, und um die Geschwindigkeit des Fahrzeugs zu berechnen, und zwar auf der Basis der Daten zu den Positionen auf der Strecke und den Zeitangaben, die entsprechend einer weiteren Übereinstimmung zwischen den in unterschiedlichen Momenten gemachten Bildern gruppiert wurden.

## Claims

1. Method for grouping data associated with images, comprising the following steps:
/1/ capturing images (I), using a capture device (11) of at least one field station (1), each whereof is a view of at least one target provided with an identification zone for identifying said target, said identification zone containing distinguishing features allowing said target to be distinguished from other targets, and the respective identification zones of the targets having common characteristics;
/2/ using the common characteristics of the identification zones, extracting at least one image portion (IT) of each image (I), using an image processing module (12) of the at least one field station (1), said image portion containing the identification zone and being smaller than said image;
/3/ transmitting the extracted image portions (IT) to an image comparison unit;
**characterised by** the following step of:
/4/ by using the image comparison unit, searching for an appearance match between the distinguishing features in different image portions (IT) extracted in step /2/, and grouping together data associated with the images having produced a positive match result.

2. Method according to claim 1, wherein step /4/ comprises at least one imaging correction applied to at least one of the image portions (IT) for which the appearance match is sought between the distinguishing features, but not to another of said image portions for which the appearance match is sought, and said imaging correction being determined in order to at least partially compensate for variations in the image capture conditions between said image portions, and the appearance match is sought using the corrected image portion and the uncorrected image portion.

3. Method according to claim 1 or 2, wherein step /4/ comprises at least two imaging corrections, each of which is applied to at least one of the image portions (IT) for which the appearance match is sought between the distinguishing features, but not to another of said image portions for which the appearance match is sought, each imaging correction concerning a different imaging parameter, and the image portion that is corrected for one of the imaging parameters being different to the image portion that is corrected for the other of said imaging parameters.

4. Method according to claim 3, wherein said at least one imaging parameter is selected from among:
- a contrast of the distinguishing features in the image portion;
- an apparent dimension of the distinguishing features in the image portion;
- a capture angle relative to a direction perpendicular to the identification zone on the target; and
- a sharpness of the distinguishing features in the image portion.

5. Method according to any of claims 1 to 4, implemented in order to characterise a trajectory of one of the targets.

6. Method according to one of claims 1 to 5, implemented in order to determine a journey travelled by a vehicle on a portion of road network, wherein the images are captured in step /1/ using a plurality of image capture devices, and the appearance match between the distinguishing features is sought in step /4/ in image portions extracted from images that have been respectively captured by different devices from among the devices used and wherein:
each target is a vehicle (V) travelling on the portion of road network (100, 101, 102), registration features inscribed on a registration plate of the vehicle forming at least part of the distinguishing features,
the images are captured at separate waypoints within the portion of road network, and the data associated with each image comprise at least a reference of the waypoint at which said image was captured; and
a signature of the journey travelled by the same vehicle comprises the references of the waypoints grouped according to the appearance match between the distinguishing features contained in image portions that have been respectively captured by a plurality of the image capture devices.

7. Method according to any of claims 1 to 5, implemented in order to measure an average speed of a vehicle on a section of road between two waypoints, wherein the images are captured in step /1/ using a plurality of image capture devices, and the appearance match between the distinguishing features is sought in step /4/ in image portions extracted from images that have been respectively captured by different devices from among the devices used and wherein:
each target is a vehicle (V) travelling on the section of road (103), the registration features inscribed on a registration plate of the vehicle forming at least part of the distinguishing features,
the images are captured by at least two image capture devices located at separate waypoints along the section of road, and the data associated with each image comprise at least a datum containing the time of capture of said image and a reference of the waypoint at which said image was captured; and
the average speed of the vehicle is calculated from the data containing the image capture times and the references of the waypoints grouped according to an appearance match between the distinguishing features in image portions that have been respectively captured by the two image capture devices.

8. Method according to any of claims 1 to 5, implemented in order to measure a speed of a vehicle on a road by stereoscopic effect, wherein the images are captured in step /1/ using a plurality of image capture devices, and the appearance match between the distinguishing features is sought in step /4/ in image portions extracted from images that have been respectively captured by different devices from among the devices used and wherein:
each target is a vehicle (V) travelling on the road (104), the registration features inscribed on a registration plate of the vehicle forming at least part of the distinguishing features,
the images are captured by at least two separate image capture devices disposed such that the vehicle is within a field of view common to the image capture devices when the images are captured, and positions of the vehicle in the images captured respectively and simultaneously by the two image capture devices allow a current position of said vehicle on the road to be determined by stereoscopic effect, and the data associated with each image comprising at least a datum containing the position of the vehicle in said image and a datum containing the time of capture of said image; and
the position of the vehicle on the road being calculated from the position data associated with two images captured at the same time respectively by the two image capture devices, according to an appearance match between the distinguishing features contained in the image portions derived from said images, and to calculate the speed of the vehicle from said positions on the road and the time data grouped according to another appearance match between images that were captured at different times.

9. Method according to any of claims 1 to 5, implemented in order to carry out an access control, wherein each target is an individual, the identification zone is a portion of the surface of the skin of the individual, and the distinguishing features comprise line patterns or cutaneous elements.

10. Method according to any of claims 1 to 5, implemented in order to carry out a biometric comparison, wherein each target is an image of a surface of the skin, the identification zone is a portion of said image of a surface of the skin, and the distinguishing features comprise line patterns or cutaneous elements.

11. System for grouping data associated with images, comprising:
- at least one image capture device (11), adapted to capture images (I) of targets;
- at least one image processing module (12), respectively coupled with each image capture device, and adapted to extract, from each image (I), at least one image portion (IT) that is smaller than said image and containing an identification zone for identifying a target contained in said image, based on characteristics common to the identification zones of the targets;
- an image comparison unit (10);
- at least one module (13) for transmitting the image portions, connected to transmit the image portions extracted by the image processing module to the image comparison unit; and
- at least one data acquisition module (14), adapted to associate data with each captured image;
**characterised in that**:
the image comparison unit (10) is adapted to search for an appearance match between distinguishing features contained in the identification zones, in different image portions extracted by the image processing module (12), and to group together the data associated with the images having produced a positive match result.

12. System according to claim 11, adapted to implement a method for grouping data associated with images, and which complies with any of claims 1 to 5.

13. System according to claim 11 or claim 12, comprised within a vehicle surveillance assembly for characterising journeys travelled by the vehicles in a portion of road network (100, 101, 102);
the system comprising at least three image capture devices (11) intended to be installed at separate waypoints in the portion of road network;
each image processing module (12) being adapted to extract image portions (IT) containing registration plates of vehicles contained in the images (I);
said at least one data acquisition module (14) being adapted to associate each image captured with at least a reference of the waypoint at which said image was captured; the registration features inscribed on a registration plate of each vehicle forming at least part of the distinguishing features for which the image comparison unit (10) searches for the appearance match; and
the assembly being adapted to produce the references of the waypoints grouped according to an appearance match between distinguishing features contained in image portions respectively captured by a plurality of image capture devices, as a signature of the journey travelled by the same vehicle.

14. System according to claim 11 or claim 12, comprised within an assembly for measuring average speeds of vehicles travelling on a section of road;
the system comprising at least two image capture devices (11) intended to be installed at separate waypoints along the section of road (103);
each image processing module (12) being adapted to extract image portions (IT) containing registration plates of vehicles contained in the images (I);
said at least one data acquisition module (14) being adapted to associate each image captured with at least a datum containing the time of capture of said image and a reference of the waypoint at which said image was captured;
the registration features inscribed on a registration plate of each vehicle (V) forming at least part of the distinguishing features for which the image comparison unit (10) searches for the appearance match; and
the assembly being adapted to calculate the average speed of a vehicle from the data containing the image capture times and the references of the waypoints grouped according to an appearance match between distinguishing features contained in image portions respectively captured by the two image capture devices.

15. System according to claim 11 or claim 12, comprised within an assembly for measuring vehicle speeds by stereoscopic effect;
the system comprising at least two image capture devices (11) intended to be installed at a waypoint for the vehicles, such that a vehicle (V) is inside a field of view common to the image capture devices when the images are captured, and positions of said vehicle in the images captured respectively and simultaneously by the two image capture devices allow a current position of the vehicle on the road to be determined by stereoscopic effect;
each image processing module (12) being adapted to extract image portions (IT) containing registration plates of vehicles contained in the images (I);
said at least one data acquisition unit (14) being adapted to associate each image captured with at least a datum containing the position of the vehicle in said image and a datum containing the time of capture of said image;
the registration features inscribed on a registration plate of the vehicle forming at least part of the distinguishing features for which the image comparison unit searches for the appearance match; and
the assembly being adapted to calculate the position of the vehicle on the road from the position data associated with two images captured at the same time respectively by the two image capture devices, according to an appearance match between the distinguishing features in the image portions derived from said images, and to calculate the speed of the vehicle from the positions on the road and the time data grouped according to another appearance match between images that were captured at different times.
